# FASCICULE DE BREVET EUROPEEN

(11) **EP 1 700 517 B1**
(45) Date de publication et mention de la délivrance du brevet: **22.10.2008**
(21) Numéro de dépôt: 06110586.2
(22) Date de dépôt: 02.03.2006
(51) Int. Cl.: A01B 61/04

(54) **Charrue**
Pflug
Plough

(30) Priorité: 07.03.2005 FR 0550598
(43) Date de publication de la demande: 13.09.2006
(73) Titulaire: Kuhn-Huard S.A., 44142 Chateaubriant (FR)
(72) Inventeur: Aoustin, Gérard, 44110, SAINT AUBIN DES CHATEAUX (FR); Paugam, Denis, 44110, CHATEAUBRIANT (FR)
(74) Mandataire: Andres, Jean-Claude

(56) Documents cités:
- CH-A- 89 491
- DE-A1- 3 146 920
- FR-A- 1 113 280
- FR-A- 1 138 538
- US-A- 2 612 827

## Description

La présente invention se rapporte au domaine technique général du machinisme agricole. Elle concerne plus particulièrement une charrue comprenant un avant-train et un arrière-train comportant un bâti et au moins deux ages, chaque age est lié audit bâti au moyen d'une première articulation d'axe sensiblement horizontal et perpendiculaire à la direction d'avance et porte au moins un corps de labour au moyen d'un étançon respectif, chaque age est aussi équipé d'au moins un dispositif de sécurité permettant l'escamotage du corps de labour vers l'arrière autour de ladite première articulation lorsqu'il rencontre un obstacle enfoui dans le sol.

Tous les dispositifs de sécurité existant ont pour but d'éviter d'endommager les pièces maîtresses de la charrue sous l'effet des contraintes s'exerçant lorsque le corps de labour, au travail, rencontre un obstacle. L'escamotage du corps doit avoir lieu pour des contraintes admissibles, inférieures à celles susceptibles de provoquer un tel endommagement.

Avec l'évolution de la technique agricole, les agriculteurs utilisent de plus en plus des charrues avec un grand nombre de corps, ce qui augmente la taille et le poids de ces charrues. La tendance est aussi de travailler à des vitesses toujours plus élevées. Plus on laboure vite, plus les risques de déformer ou de briser les pièces du bâti sous l'action de contraintes trop élevées, sont grands. L'accroissement de la vitesse de travail et les dimensions relativement importantes de ces charrues imposent donc une construction solide des différentes pièces de la charrue et sa construction devient donc très lourde. Le fonctionnement des sécurités est donc primordial pour prévenir une détérioration de la charrue ce qui entraîne des frais d'entretien élevés et des pertes de temps.

Il existe déjà de nombreuses réalisations de dispositifs de sécurité. Les plus communes sont les dispositifs de sécurité non stop, mécaniques ou hydrauliques, qui permettent d'escamoter le corps avec son age en cas d'obstacle puis de le remettre automatiquement dans sa position de travail lorsque l'obstacle est passé. Une sécurité non stop hydraulique comporte un vérin et un élément amortisseur constitué d'un accumulateur sous pression. Cette technologie oléopneumatique utilise divers composants qui grèvent le poids et le coût de la charrue.

D'autres dispositifs de sécurité à boulons de rupture présentent notamment l'inconvénient de devoir remplacer le boulon après chaque rupture. Ce dispositif de sécurité n'apporte qu'un poids supplémentaire minime à la charrue. Dans ce cadre, l'homme de l'art connaît le document FR 1 458 614 qui se rapporte à un dispositif de sécurité à boulon de cisaillement pour un age de charrue. L'age est lié au bâti au moyen d'une première articulation d'axe sensiblement horizontal et sensiblement orthogonal à la direction de déplacement durant le travail. Le boulon de cisaillement traverse l'age et le bâti de part en part, il bloque ainsi le pivotement de l'age autour de la première articulation de pivotement tant que le corps de labour ne rencontre pas une résistance anormale. Le boulon de sécurité est destiné à se rompre dès que le corps de labour subit un effort trop important engendré par un obstacle. La première articulation permet à l'age de pivoter vers l'arrière et vers le haut dès la rupture du boulon de sécurité. Lorsque l'effort sur la pointe du corps devient trop important, le boulon est cisaillé. Par la fatigue, le déclenchement de ce dispositif de sécurité respectivement le cisaillement du boulon devient aléatoire. D'autre part, durant l'utilisation, le boulon a tendance à se déformer sous l'effet d'un effort de cisaillement. On observe aussi un matage des pièces voisines du boulon de cisaillement qui provoque d'une part une rupture moins précise et d'autre part un démontage pénible des parties du boulon cisaillé. Il est, en effet, fréquent que les deux parties du boulon cisaillé soient coincées dans leurs logements. Ainsi, le dégagement des parties du boulon est relativement difficile et le remplacement du boulon est donc plutôt long.

Le document FR 1138 538 décrit un dispositif de sécurité utilisant un boulon sollicité à la traction pour un étançon de charrue. L'étançon est fixé sur le longeron de l'age de charrue au moyen d'une articulation. Cette articulation permet à l'étançon de pivoter autour de l'age. Le pivotement de l'étançon par rapport à l'age est sécurisé par le boulon de traction qui maintient l'étançon dans une position sensiblement verticale par rapport à l'age. Lors de la rupture du boulon de traction, suite à un effort trop important à la pointe du soc, le corps de labour avec son étançon respectif s'escamote par pivotement vers l'arrière compte tenu de la direction d'avance.

L'utilisation d'un boulon de traction sur l'étançon apporte l'inconvénient d'un dispositif de sécurité qui est engageant. En effet, suite à la rupture du boulon, l'étançon pivote vers l'arrière et la pointe de soc qui a rencontré un obstacle va d'abord s'enfoncer dans le sol avant d'en ressortir. Le corps de labour a donc tendance à soulever l'ensemble de la charrue jusqu'à ce que la pointe du corps soit située derrière l'articulation de pivotement de l'étançon. Ce soulèvement entraîne des efforts importants sur l' age et sur le bâti de la charrue.

Le but de la présente invention est de remédier aux inconvénients des dispositifs de sécurité connus tout en veillant à obtenir une réalisation simple, fiable et peu chère.

Conformément à la présente invention telle que revendiquée, ladite charrue se caractérise par le fait qu'au moins un desdits ages comporte un dispositif de sécurité réalisé sous la forme d'un boulon sollicité à la traction.

Avec un tel dispositif de sécurité formé d'un boulon de traction, le déclenchement du dispositif de sécurité est précis lorsque l'effort à la pointe du corps de labour dépasse la valeur admissible. D'autre part, la rupture du boulon par traction est franche, l'opération de dégagement des parties du boulon cassé est aisée et le remplacement du boulon est donc rapide.

Selon une autre caractéristique de l'invention, ladite première articulation est disposée en avant de la pointe de soc compte tenu de la direction d'avance. Cette implantation particulière de la première articulation permet au corps de labour et à l'age respectif d'être soulevés devant l'obstacle par son mouvement de rotation autour de la première articulation lors de la rupture du boulon de traction. Le corps de labour est ainsi immédiatement dégagé hors du sol lors de la rupture du boulon de traction.

D'autres caractéristiques et avantages de l'invention ressortiront des revendications et de la description ci-après d'un exemple de réalisation non limitatif de l'invention avec référence aux dessins annexés dans lesquels :
- la **figure 1** représente une vue générale d'une charrue selon l'invention,
- la **figure 2** représente une vue latérale d'un age de charrue en position de travail normale,
- la **figure 3** représente une vue latérale d'un age lors du passage d'un obstacle suite à un déclenchement du dispositif de sécurité,
- la **figure 4** représente une vue de détail de l'age de la figure 3.

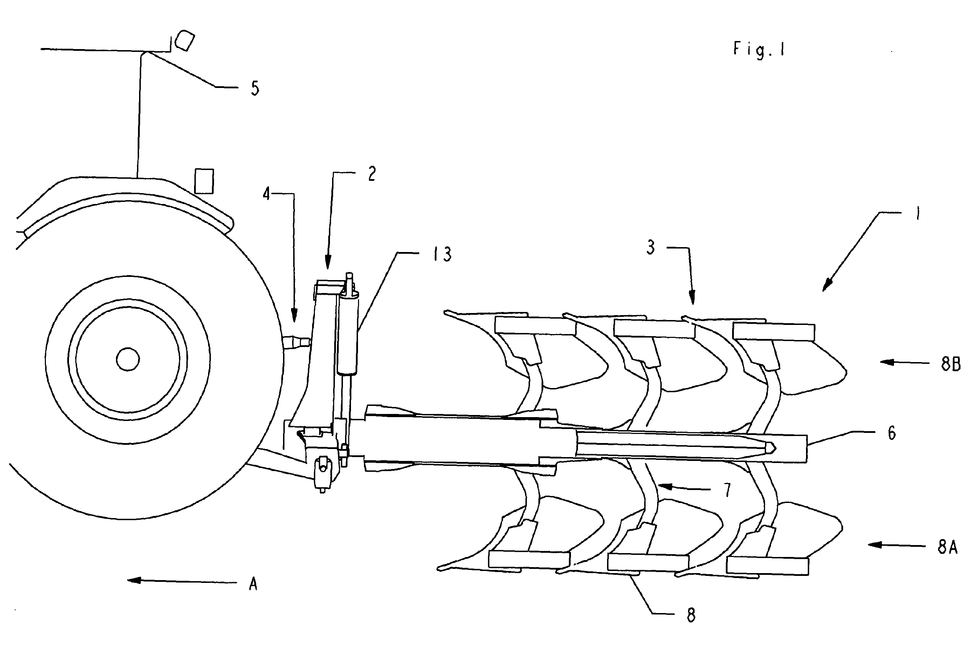

Telle qu'elle est représentée sur la figure 1, la machine selon l'invention est une charrue portée (1). D'une manière connue de l'homme de l'art, ladite charrue (1) se compose d'un avant-train (2) et d'un arrière-train (3). L'avant-train (2) est la partie avant de la charrue (1) qui est reliée au système d'attelage trois points (4) d'un tracteur (5). L'avant-train (2) est encore destiné à porter l'arrière-train (3) de la charrue (1). L'arrière-train (3) est globalement composé d'un bâti (6), d'au moins un age (7) et d'au moins un corps de labour (8). Le bâti (6) est constitué d'une poutre de section carrée ou rectangulaire qui est renforcée localement pour résister aux efforts de torsion lors du travail et aux efforts de flexion pendant le transport. Cette structure du bâti (6) lui permet entre autre de supporter les ages de charrue (7). Dans l'exemple de réalisation de la figure 1, la charrue (1) présente trois ages (7) équipé chacun de deux corps de labour (8). Chaque age (7) est lié au bâti (6) au moyen d'une première articulation (9). Cette première articulation (9) présente un axe au moins sensiblement horizontal et au moins sensiblement orthogonal à la direction (A) de déplacement durant le travail. Chaque age (7) soutient au moins un corps de labour (8) au moyen d'un étançon (10) correspondant. L'age (7) sert à transmettre l'effort de traction du tracteur (5) au corps de labour (8). Ce dernier comporte un soc (11) qui découpe une bande de terre qui est ensuite retournée par un versoir (12) lors du déplacement de la charrue (1) dans le sens d'avance (A).

Ladite charrue (1) est déplacée suivant une direction et un sens d'avance indiqué par la flèche (A). Dans la suite de la description, les notions "avant" et "arrière", "devant" et "derrière" sont définies par rapport au sens d'avance (A) et les notions "droite" et "gauche" sont définies en regardant ladite charrue (1) de l'arrière dans ledit sens d'avance (A).

Dans l'exemple de réalisation de la charrue portée (1) représentée sur les figures, il s'agit d'une charrue (1) de type réversible. La charrue (1) comporte ainsi deux groupes (8A ; 8B) de corps de labour (8). Un premier groupe de corps de labour (8A) étant destiné au labour à droite et un deuxième groupe (8B) destiné au labour à gauche. La charrue (1) est également équipée d'un dispositif de retournement (13) porté par l'avant-train (2). Le dispositif de retournement permet de pivoter l'arrière-train (3) d'environ 180° autour d'un axe de retournement, la charrue (1) peut donc occuper au moins deux positions de travail. Le bâti (6) est relié à l'avant-train (2) au moyen de l'axe de retournement qui est aussi appelé la fusée.

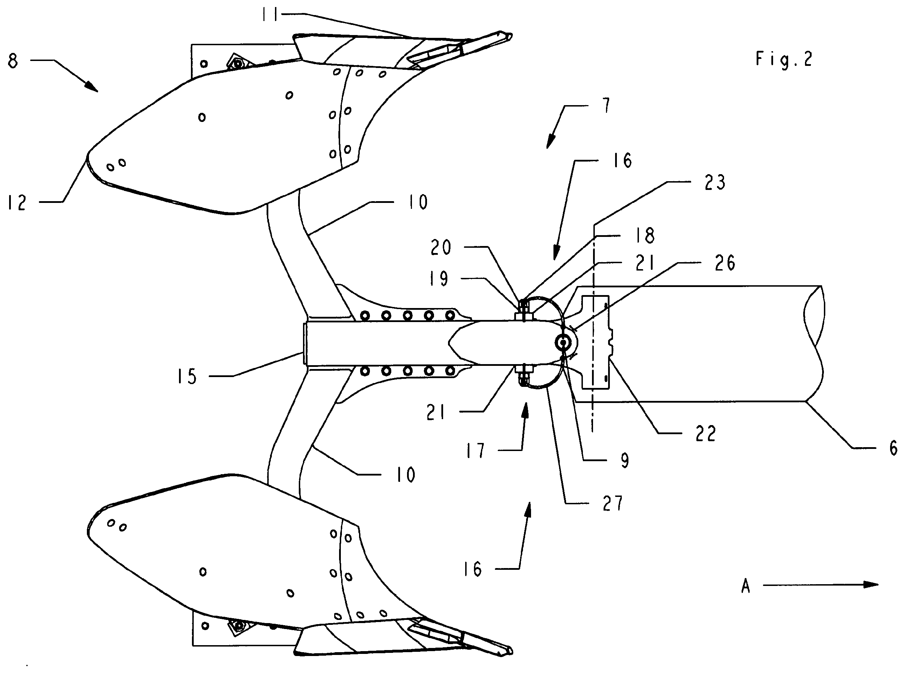

La figure 2 représente un age (7) destiné à être monté sur une charrue (1) réversible dans une position de travail. L'age (7) soutient deux corps de labour (8) au moyen d'un étançon (10) respectif. Un des corps de labour (8) appartient au premier groupe (8A) et l'autre appartient au deuxième groupe (8B). L'age (7) est constitué d'un longeron (15) et de deux étançons (10) qui portent chacun un corps de labour (8). Le longeron (15) est un élément longitudinal essentiellement horizontal alors que l'étançon (10) est une pièce essentiellement verticale présentant par exemple une forme en col de cygne. Les étançons (10) sont liés de part et d'autre du longeron (15). Le longeron (15) est lié audit bâti (6) au moyen de la première articulation (9). Dans l'exemple de réalisation représenté aux figures, l'age (7) est formé d'une seule pièce regroupant un longeron (15) et deux étançons (10).

Les corps de labour (8) de la charrue (1) étant destinés à travailler dans le sol, ils peuvent rencontrer des obstacles importants tels que des pierres. Afin d'éviter toute détérioration d'une des pièces maîtresses de la charrue (1) et donc de prévenir d'éventuels frais d'entretien, ledit age (7) est équipé d'au moins un dispositif de sécurité (16). Celui-ci permet l'escamotage du corps de labour (8) vers l'arrière lorsqu'il rencontre un obstacle enfoui dans le sol. Ce dispositif de sécurité (16) a pour rôle, l'effacement du corps (8) lorsque les contraintes s'exerçant à la pointe du soc (11) sont susceptibles de provoquer un endommagement de la charrue (1). Le dispositif de sécurité (16) se déclenche pour des contraintes admissibles, inférieures à celles provoquant des détériorations de l'age (7) ou du bâti (6).

Selon une caractéristique importante de l'invention, au moins un desdits ages (7) comporte un dispositif de sécurité (16) réalisé sous la forme d'un boulon (17) sollicité à la traction. Lorsque le boulon de traction (17) se casse suite à un effort trop élevé à la pointe du soc (11), le corps de labour (8) correspondant porté par l'age (7) s'efface par pivotement autour de la première articulation (9) vers l'arrière et vers le haut. Avec un boulon de traction (17), le déclenchement du dispositif de sécurité (16) est précis. Dès que l'effort à la pointe du soc (11) dépasse la valeur admissible, le boulon de traction (17) se rompt presque instantanément. Comme la rupture de ce boulon de traction (17) est franche, le dégagement des deux parties du boulon (17) est aisé. Dans l'exemple de réalisation de la figure 1, chacun des trois ages (7) de la charrue (1) est équipé d'un dispositif de sécurité (16) réalisé sous la forme d'un boulon (17) sollicité à la traction. Ainsi, seul le dispositif de sécurité (16) de l'age (7) dont le corps de labour (8) rencontre un obstacle se déclenche. Les autres corps de labour (8) restent dans le sol et poursuivent leur travail de retournement de la terre.

Actuellement, les charrues comportent souvent plusieurs corps de labour (8) disposés l'un derrière l'autre. La charrue (1) de la figure 1 présente deux groupes de trois corps de labour (8A ; 8B). Chacun des trois corps de labour (8) est utilisé lors du travail, chaque corps de labour (8) est donc susceptible de rencontrer un obstacle tel qu'une pierre risquant d'endommager la charrue (1). Afin d'éviter cela, chaque age (7) est équipé d'un dispositif de sécurité (16) sous la forme de boulon (17) de rupture travaillant à la traction. Le dispositif de sécurité (16) doit être efficace même avec l'accroissement des efforts et des vitesses de labour. Le rôle de ce dispositif de sécurité (16) est de prévenir la déformation voire la rupture d'une pièce essentielle de la charrue (1) lors d'un choc avec un obstacle.

D'une manière préférentielle, le boulon de traction (17) s'étend sensiblement perpendiculairement à l'axe de la première articulation (9) pour une efficacité optimale du dispositif de sécurité (16). Le boulon de traction (17) est, dans l'exemple de réalisation représenté à la figure 2, sensiblement vertical. Le boulon de traction (17) est avantageusement formé par une vis (18), un écrou (19) et un contre-écrou (20).

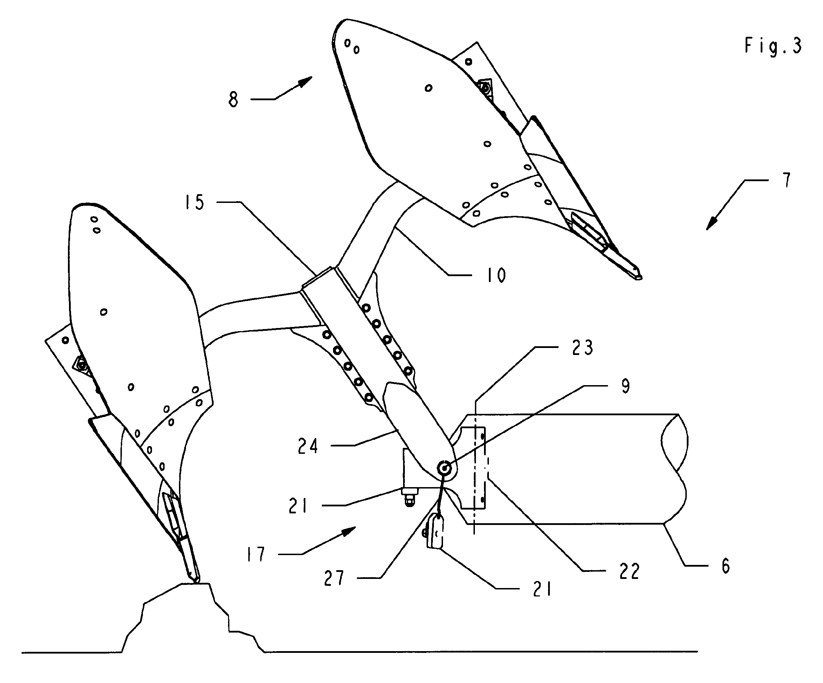

Selon une autre caractéristique importante de l'invention, ladite première articulation (9) est disposée au moins dans le plan vertical contenant la pointe de soc (11) compte tenu de la direction d'avance (A). A la lumière de la figure 2, on remarque que ladite première articulation (9) est disposée en avant de la pointe de soc (11). Le plan vertical contenant ladite première articulation (9) d'un age (7) est disposé nettement en avant du plan vertical contenant la pointe du soc (11) du corps de labour correspondant (8). Cette position de la première articulation (9) par rapport à la pointe de soc (11) permet lors de la rupture du boulon de traction (17) de bien dégager le soc (11) devant l'obstacle. Le corps de labour (8) est ainsi directement soulevé hors du sol devant l'obstacle comme représenté sur la figure 3. Il s'agit donc d'un dispositif de sécurité (16) dégageant.

D'une manière particulièrement avantageuse, le longeron (15) de l'age (7) est maintenu en position sur le bâti par au moins une plaquette (21) au moyen du boulon de traction (17). Le pivotement de l'age (7) autour de la première articulation (9) est de ce fait empêché. Le longeron (15) est sensiblement parallèle au bâti (6) de la charrue (1). Dans l'exemple de réalisation de la charrue (1) réversible, le boulon de traction (17) est associé à deux plaquettes (21). Chaque plaquette (21) réalise une butée pour l'age (7) dans une des deux positions de travail. Le longeron (15) est serré entre les deux plaquettes (21) par le boulon de traction (17).

Durant le travail, lorsque le corps de labour (8) évolue dans le sol, la résistance à l'avance exercée par le sol sur le corps (8) engendre un effort de traction dans le boulon (17). Tant que cet effort reste dans une certaine limite, l'allongement de la vis (18) du boulon de traction (17) reste dans le domaine de déformation élastique et la vis (18) revient à sa longueur initiale après disparition de l'effort de traction.

Dans le cas enfin où le corps de labour (8) accrocherait un gros obstacle enfoui dans le sol, la vis (18) pourrait s'allonger jusqu'à la rupture. L'age (7) pourra alors pi voter, vers l'arrière et vers le haut, autour de l'axe de la première articulation (9) comme représenté à la figure 3. L'age (7) pourra ainsi s'effacer et aucune rupture du corps de labour (8), de l'age (7) ou même du bâti (6) n'est à craindre. Après avoir remonté un nouveau boulon de traction (17), la charrue (1) est à nouveau opérationnelle pour la suite du travail.

On comprendra que la valeur de rupture du boulon de traction (17) n'est pas tributaire des pièces environnantes. Du reste, la rupture du boulon de traction (17) n'entraîne pas non plus de dommages sur lesdites pièces environnantes.

Dans l'exemple de réalisation représenté sur les figures 2 et 3, il s'agit d'une charrue (1) à largeur de travail variable. L'age (7) est ainsi lié au bâti (6) au moyen d'un boîtier (22). Le boîtier (22) est relié au bâti (6) de la charrue (1) par une deuxième articulation (23) d'axe sensiblement vertical. Cette deuxième articulation (23) permet d'adapter le corps de labour (8) à différentes largeurs de coupe. Le boîtier (22) est lié à l'age (7) au moyen de ladite première articulation (9). L'extrémité de l'age (7) présente une forme de chape (24) qui permet à l'age (7) de pivoter par rapport au boîtier (22) autour de la première articulation (9). Le boîtier (22) présente à l'arrière un dégagement (25) dans une direction sensiblement verticale.

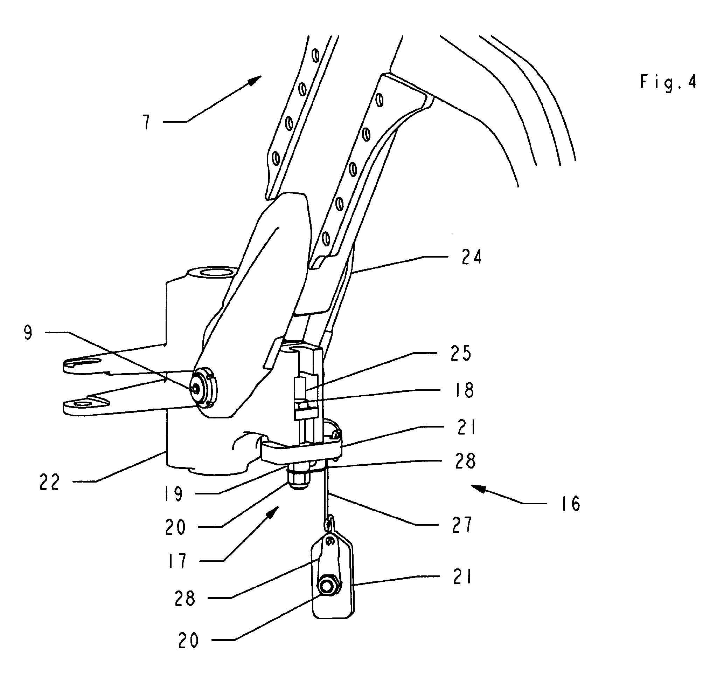

Selon une réalisation avantageuse de l'invention, comme représentée à la figure 2, chaque age (7) est sécurisé par deux boulons de traction (17). Un des boulons de traction (17) est actif dans une des positions de travail et l'autre boulon de traction (17) est actif dans l'autre position de travail. Dans la position de travail, représentée sur la figure 2, le longeron (15) de l'age (7) est maintenu entre les deux plaquettes (21) par les deux boulons (17). Sur la figure 2, on comprendra que le corps de labour (8) inférieur, sous le bâti (6), est dans une configuration de travail, il est engagé dans le sol. Celui-ci est sécurisé par le boulon de traction (17) supérieur qui est destiné à se rompre si l'effort à la pointe du soc (11) est trop élevé. Sur les figures 3 et 4, on remarque que le dispositif de sécurité (16) de l'age (7) s'est déclenché, le boulon de traction (17) supérieur s'est cassé. Le boulon de traction (17) inférieur reste, quant à lui, en position sur le bâti (6). Chaque boulon de traction (17) est, d'une manière préférentielle, associé à une plaquette (21). Ladite plaquette (21) permet de placer le longeron (15) par rapport audit bâti (6). Ainsi, lorsque le longeron (15) est en appui sur la plaquette inférieure (21), l'age (7) est alors en butée basse et bien positionné par rapport au bâti (6). Le dégagement (25) dans la partie arrière du boîtier (22) permet avantageusement de recevoir les deux boulons de traction (17). Le dégagement (25) permet d'une part d'enfiler lesdits boulons (17) et d'autre part de les maintenir pour serrer la plaquette (21) correspondante contre le boîtier (22).

L'utilisation de deux boulons de traction (17) par age (7) simplifie beaucoup l'opération de remplacement d'un boulon (17). En effet, suite à la rupture du boulon (17) supérieur, l'age (7) pivote vers le haut autour de la première articulation (9) puis revient contre la plaquette (21) inférieure sous l'effet de son poids. Lorsque l'age (7) est en butée basse contre la plaquette (21) inférieure, l'opération de changement de boulon (17) est simple car le longeron (15) est dans le prolongement dudit boîtier (22). Il suffit de retirer la partie du boulon (17) cassée et d'enfiler une nouvelle vis (18) dans le dégagement (25) du boîtier (22). Pour que la charrue (1) soit à nouveau fonctionnelle, il faut bloquer le longeron (15) et la plaquette (21) en serrant l'écrou (19) et le contre-écrou (20). Si le poids de l'age (7) n'est pas suffisant pour se mettre contre la butée basse, on pourra lever la charrue (1) via le système d'attelage trois points (4) du tracteur (5).

Selon un autre exemple de réalisation non représenté sur les figures, l'age (7) équipé de deux corps de labour (8) est maintenu par un seul boulon de traction (17). Dans ce cas, le longeron (15) est serré entre deux plaquettes (21) par une seule vis (18) qui traverse le boîtier (22). Lors de la rupture du boulon (17), son remplacement est délicat et souvent long car l'age (7) se positionne souvent en dessous de la position permettant de remettre une vis (18). Il faut donc d'abord repositionner l'age (7) et en particulier le longeron (15) dans le prolongement du bâti (6) ou selon le cas du boîtier (22) de manière à pouvoir enfiler la vis (18).

D'une manière avantageuse, le boîtier (22) comporte, pour chaque position de travail, une butée haute (26). Cette butée haute (26) évite d'endommager l'environnement proche de l'age (7) qui s'est déclenché avec la rupture du boulon de traction (17).

A la lumière des figures 2 à 4, on remarque que chaque plaquette (21) est maintenue par un dispositif (27). Lors de la rupture du boulon de traction (17), le dispositif (27) retient la plaquette (21) et évite la perte de la plaquette (21) dans la terre. Ce dispositif (27) est, de préférence, accroché à l'age (7) de la charrue (1). D'une manière avantageuse, ce dispositif (27) est un lien souple. Pour éviter de perdre la partie du boulon avec l'écrou (19) et le contre-écrou (20) lors d'une rupture, elle est reliée à la plaquette (21) par une attache (28). Cette attache (28) est avantageusement montée entre l'écrou (19) et le contre-écrou (20).

Avec un dispositif de sécurité (16) à boulons de traction (17) sur l'age (7) de la charrue (1), la construction de ladite charrue (1) est relativement simple.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection.

Ainsi selon un autre exemple de réalisation non représenté, ladite charrue est du type simple non réversible. Dans ce cas, chaque age ne porte qu'un seul corps de labour et le dispositif de sécurité ne comporte qu'un seul boulon de traction.

Selon un autre exemple de réalisation non représenté, ladite charrue est du type à largeur de travail fixe. L'age est ainsi directement lié audit bâti via la première articulation. Cette invention s'applique également pour des charrues à largeur de travail multiple.

Selon un autre exemple de réalisation non représenté, ladite charrue est du type semi-porté. Dans ce cas, l'arrière-train est muni de roues au moyen desquelles ladite charrue repose au moins partiellement sur le sol.

La présente invention concerne également les charrues du type traînée. L'attelage de la charrue au tracteur se fait donc simplement par un timon accroché au piton.

## Revendications

1. Charrue (1) comprenant un avant-train (2) et un arrière-train (3) comportant un bâti (6) et au moins deux ages (7), chaque age (7) est lié audit bâti (6) au moyen d'une première articulation (9) d'axe sensiblement horizontal et perpendiculaire à la direction d'avance (A) et porte au moins un corps de labour (8) au moyen d'un étançon (10) respectif, chaque age (7) est aussi équipé d'au moins un dispositif de sécurité (16) permettant l'escamotage du corps de labour (8) vers l'arrière autour de ladite première articulation (9) lorsqu'il rencontre un obstacle enfoui dans le sol ***caractérisée par le fait* qu'**au moins un desdits ages (7) comporte un desdits dispositifs de sécurité (16) réalisé sous la forme d'un boulon (17) sollicité à la traction.

2. Charrue selon la revendication 1, ***caractérisée par le fait* que** ledit boulon de traction (17) s'étend sensiblement perpendiculairement à l'axe de la première articulation (9).

3. Charrue selon la revendication 1 ou 2, ***caractérisée par le fait* que** ladite première articulation (9) est disposée au moins sensiblement dans le même plan que la pointe de soc (11) compte tenu de la direction d'avance (A).

4. Charrue selon la revendication 1 ou 2, ***caractérisée par le fait* que** ladite première articulation (9) est disposée en avant de la pointe de soc (11) compte tenu de la direction d'avance (A).

5. Charrue selon l'une quelconque des revendications 1 à 4, ***caractérisée par le fait* qu'**après un déclenchement du dispositif de sécurité (16), l'age (7) retrouve sa position de travail au moyen d'une butée basse.

6. Charrue selon l'une quelconque des revendications 1 à 5, ***caractérisée par le fait* que** pour le travail, l'age (7) est maintenu sensiblement parallèle audit bâti (6) au moyen d'au moins une plaquette (21) fixée par ledit boulon de traction (17).

7. Charrue selon la revendication 6, ***caractérisée par le fait* que** chaque plaquette (21) est maintenue par un dispositif (27) sur l'age correspondant (7).

8. Charrue selon l'une quelconque des revendications 1 à 7, ***caractérisée par le fait* que** ladite charrue (1) est réversible et que chaque age (7) comporte deux boulons de traction (17), chacun est actif pour une position de travail.

9. Charrue selon l'une quelconque des revendications 6 à 8, ***caractérisée par le fait* qu'**au moins une desdites plaquettes (21) fait office de butée basse pour l'age (7) dans une des positions de travail.

10. Charrue selon l'une quelconque des revendications 1 à 9, ***caractérisée par le fait* que** ladite charrue (1) est à largeur variable et que chaque age (7) est lié audit bâti (6) au moyen d'un boîtier (22), ledit boîtier (22) est lié d'une part à l'age (7) au moyen de ladite première articulation (9) et d'autre part au bâti (6) au moyen d'une deuxième articulation (23) d'axe sensiblement vertical.

11. Charrue selon la revendication 10, ***caractérisée par le fait* que** ledit boîtier (22) présente un dégagement (25) permettant de recevoir au moins un boulon de traction (17).

## Claims

1. Plough (1) comprising a fore-carriage (2) and a hind-carriage (3) with a frame (6) and at least two beams (7), each beam (7) is connected to the said frame (6) by means of a first articulation (9) with an axis which is substantially horizontal and perpendicular to the direction of forward travel (A) and carries at least one plough body (8) by means of a respective leg (10), each beam (7) is also equipped with at least one safety device (16) making it possible for the plough body (8) to retract rearwards about the said first articulation (9) when it encounters an obstacle buried in the ground, ***characterized in* that** at least one of the said beams (7) comprises one of the said safety devices (16) made as a bolt (17) subjected to tensile stresses.

2. Plough according to Claim 1, ***characterized in* that** the said traction bolt (17) extends substantially at right angle to the axis of the first articulation (9).

3. Plough according to Claim 1 or 2, ***characterized in* that** the said first articulation (9) is arranged at least substantially in the same plane as the share point (11) with regard to the direction of forward travel (A).

4. Plough according to Claim 1 or 2, ***characterized in* that** the said first articulation (9) is arranged ahead of the share point (11) with regard to the direction of forward travel.

5. Plough according to any one of Claims 1 to 4, ***characterized in* that** after the safety device (16) has released, the beam (7) comes back to its work position by means of a lower stop.

6. Plough according to any one of Claims 1 to 5, ***characterized in* that** for work the beam (7) is kept substantially parallel to the said frame (6) by means of at least one small plate (21) fastened by the said traction bolt (17).

7. Plough according to Claim 6, ***characterized in* that** each small plate (21) is held by a device (27) on the corresponding beam (7).

8. Plough according to any one of Claims 1 to 7, ***characterized in* that** the said plough (1) is reversible and **in that** each beam (7) comprises two traction bolts (17), each being active for one work position.

9. Plough according to any one of Claims 6 to 8, ***characterized in* that** at least one of the said small plates (21) serves as a lower stop for the beam (7) in one of the work positions.

10. Plough according to any one of Claims 1 to 9, ***characterized in* that** the said plough (1) is of adjustable width and **in that** each beam (7) is connected to the said frame (6) by means of a casing (22), the said casing (22) is connected on one hand to the beam (7) by means of the said first articulation (9) and on the other hand to the frame (6) by means of a second articulation (23) with a substantially vertical axis.

11. Plough according to Claim 10, ***characterized in* that** the said casing (22) has a recess (25) for housing at least one traction bolt (17).

## Patentansprüche

1. Pflug (1) mit einem Vordergestell (2) und einem Hintergestell (3), der ein Rahmen (6) und mindestens zwei Grindel (7) aufweist, wobei jeder Grindel (7) mittels eines ersten Gelenks (9) mit einer im wesentlichen horizontalen und quer zur Vorschubrichtung (A) ausgerichtete Achse mit dem Rahmen (6) verbunden ist und mindestens ein Pflugkörper (8) mittels eines jeweiligen Haltestiels (10) trägt, wobei jeder Grindel (7) ebenfalls mit mindestens einer Sicherheitsvorrichtung (16) versehen ist, die es ermöglicht den Pflugkörper (8) um das ersten Gelenk (9) nach hinten einzuziehen, wenn er auf ein im Boden vergrabenes Hindernis trifft, ***dadurch gekennzeichnet,* dass** mindestens einer der Grindel (7) eine der Sicherheitsvorrichtungen (16), die in der Art eines der Zugkraft beanspruchten Bolzens (17) ausgearbeitet wurde, aufweist.

2. Pflug nach Anspruch 1, ***dadurch gekennzeichnet,* dass** der Zugbolzen (17) sich im wesentlichen quer zur Achse des ersten Gelenks (9) erstreckt.

3. Pflug nach Anspruch 1 oder 2, ***dadurch gekennzeichnet,* dass** das erste Gelenk (9) bezüglich der Vorschubrichtung (A) mindestens im wesentlichen in der selben Ebene als die Scharspitze (11) angeordnet ist.

4. Pflug nach Anspruch 1 oder 2, ***dadurch gekennzeichnet,* dass** das erste Gelenk (9) bezüglich der Vorschubrichtung (A) vor der Scharspitze (11) angeordnet ist.

5. Pflug nach irgend einem der Ansprüche 1 bis 4, ***dadurch gekennzeichnet,* dass** nach einer Auslösung der Sicherheitsvorrichtung (16), der Grindel (7) mittels eines unteren Anschlags in seine Arbeitsstellung zurückkehrt.

6. Pflug nach irgend einem der Ansprüche 1 bis 5, ***dadurch gekennzeichnet,* dass** für die Arbeit, der Grindel (7) mittels eines Plättchen (21) im wesentlichen parallel zum Rahmen (6) gehalten wird, das durch den Zugbolzen (17) festgeschraubt ist.

7. Pflug nach Anspruch 6, ***dadurch gekennzeichnet,* dass** jedes Plättchen (21) mittels einer Vorrichtung (27) auf dem entsprechenden Grindel (7) gehalten wird.

8. Pflug nach irgend einem der Ansprüche 1 bis 7, ***dadurch gekennzeichnet,* dass** der Pflug (1) ein Drehpflug ist und dass jeder Grindel (7) zwei Zugbolzen (17) aufweist, wobei jeder in einer Arbeitsstellung wirkt.

9. Pflug nach irgend einem der Ansprüche 6 bis 8, ***dadurch gekennzeichnet,* dass** mindestens eines der Plättchen (21) als unterer Anschlag für den Grindel (7) in einer der Arbeitstellungen dient.

10. Pflug nach irgend einem der Ansprüche 1 bis 9, ***dadurch gekennzeichnet,* dass** der Pflug (1) in der Breite einstellbar ist und dass jeder Grindel (7) mittels eines Gehäuses (22) mit dem Rahmen (6) verbunden ist, wobei das Gehäuse (22) einerseits mittels des ersten Gelenks (9) mit dem Grindel (7) und andererseits mittels eines zweiten Gelenks (23) mit einer im wesentlichen senkrechten Achse mit dem Rahmen (6) verbunden ist.

11. Pflug nach Anspruch 10, ***dadurch gekennzeichnet,* dass** das Gehäuse (22) eine Ausparung (25) zur Unterbringung mindestens eines Zugbolzens (17) aufweist.
